# EUROPÄISCHE PATENTANMELDUNG

(11) **EP 4 704 278 A1**
(43) Veröffentlichungstag der Anmeldung: **04.03.2026**
(21) Anmeldenummer: 24197032.6
(22) Anmeldetag: 28.08.2024
(51) Int. Cl.: H02H 7/26, G05B 9/02, G05B 19/042

(54) **VERFAHREN UND VORRICHTUNG ZUM SCHUTZ, ZUR AUTOMATISIERUNG UND ZUR STEUERUNG EINER ANLAGE**

(71) Anmelder: Siemens Aktiengesellschaft, 80333 München (DE)
(72) Erfinder: Sommer, Dirk, 13053 Berlin (DE); Stollfuß, Marcus, 13467 Berlin (DE)
(74) Vertreter: Siemens Patent Attorneys

(57) **Zusammenfassung**

Die Erfindung betrifft ein Verfahren zum Schutz, zur Automatisierung und zur Steuerung einer Anlage mit den Schritten: Erfassen mehrerer den Zustand der Anlage oder Komponenten der Anlagen charakterisierenden oder beeinflussenden Messgrößen mittels Messsensoren 3 unter Gewinnung von mehreren Messsignalen; Erzeugen von Messwerten aus jedem Messsignal; Weiterleiten der Messwerte an eine intelligente elektronische Einheit (IED) (15), wobei jede IED (15) wenigstens eine Schutz-, Steuerungs- oder Automatisierungsfunktion (SSAF) aufweist, und wobei eine Schutzfunktion die Messwerte auf das Vorliegen wenigstens einer Fehlerbedingungen hin untersucht und bei Vorliegen einer Fehlerbedingung ein Fehlersignal erzeugt, eine Automatisierungsfunktion zur Durchführung von Prozessen innerhalb der Anlage und eine Steuerungsfunktion zur Steuerung von Komponenten der Anlage eingerichtet sind. Die Erfindung betrifft ferner eine Vorrichtung zur Durchführung dieses Verfahrens. Um ein solches Verfahren und eine solche Vorrichtung dahin zu verbessern, dass die Automatisierung, das Steuern und/oder der Schutz der Anlage besonders kostengünstig und ohne großen Wartungsaufwand erfolgen kann, wird vorgeschlagen, dass die Messignale an eine zentrale Recheneinheit (15) übertragen werden, auf der alle die Schutz- die Steuer- und die Automatisierungsfunktionen (SSAFen) zentral ablaufen und Komponenten der Anlage zeitgleich von der zentralen Recheneinheit (15) überwacht oder gesteuert werden oder Vorgänge automatisiert ablaufen.

## Beschreibung

Die Erfindung betrifft ein Verfahren zum Schutz, zur Automatisierung und zur Steuerung einer Anlage mit den Schritten: Erfassen mehrerer den Zustand der Anlage oder von Komponenten der Anlagen charakterisierenden oder beeinflussenden Messgrößen mittels Messsensoren unter Gewinnung von mehreren Messsignalen; Erzeugen von Messwerten aus jedem Messsignal; Weiterleiten der Messwerte an eine intelligente elektronische Einheit (IED), wobei jede IED wenigstens eine Schutz-, Steuerungs- oder Automatisierungsfunktion (SSAF) aufweist, und wobei eine Schutzfunktion die Messwerte auf das Vorliegen wenigstens einer Fehlerbedingungen hin untersucht und bei Vorliegen einer Fehlerbedingung ein Fehlersignal erzeugt, eine Automatisierungsfunktion zur Durchführung von Prozessen innerhalb der Anlage und eine Steuerungsfunktion zur Steuerung von Komponenten der Anlage eingerichtet sind.

Die Erfindungs betrifft ferner eine Vorrichtung mit einer zentralen Rechneneinheit, die zur Durchführung eines solchen Verfahrens eingerichtet ist.

Ein solches Verfahren und eine solche Vorrichtung sind dem Fachmann bekannt. So ist beispielsweise eine elektrische Anlage bekannt geworden, die ein elektrisches Energieversorgungsnetz umfasst. Insbesondere kann eine solche elektrische Anlalge als Umspannwerk ausgeführt sein, das zur Spannungsänderung in dem elektrischen Energieversorgungsnetz wenigsten einen Transformator als Komponente aufweist. Darüber hinaus verfügt ein solches Umspannwerk über Schalter, Sammelschienen mit Abgängen, Trennern oder dergleichen als Komponenten. Schutzgeräte bilden einen Teil der vorbekannten Vorrichtung. Die Schutzgeräte schützen Stromleitungen des Energieversorgungsnetzes, deren Komponenten wie beispielsweise Transformatoren vor den Auswirkungen von Fehlern wie Erd- und Kurzschlüssen. Durch diesen Schutz können Schäden an Personen oder den besagten Komponenten der Anlage vermieden werden.

Dies setzt jedoch voraus, dass Ströme, Spannungen sowie alle anderen relevanten Messgrößen, die den Zustand des Energieversorgungsnetztes charakterisieren oder beeinflussen können, kontinuierlich überwacht werden, so dass im Fehlerfall ein Leistungsschalter augelöst werden kann, der einen fehlerbehafteten Netzabschnitt von dem restlichen Teil des Elektroenergieversorgungsnetzes abtrennt. Aber auch auch hier müssen ökonomischen Randbedingungen berücksichtigt werden. Mit anderen Worten muss eine maximale Zuverlässigkeit des Schutzes bei geringen Kosten für Anschaffung, Inbetriebsetzung und Wartung erreicht werden.

Traditionell werden Schutzgeräte zur Ausführung einer bestimmten Schutzfunktion gefertigt. Seit der Digitalisierung der Schutztechnik ist es in gewissem Umfang möglich, ein Schutzgerät mit zur Bootzeit festgelegten Eigenschaften zu konfigurieren. Dezentrale Schutzalgorithmen wie der Überstromzeitschutz werden dabei auf Geräten ausgeführt, die einen Zugang zu Strom- und Spannungswandlern besitzen, die an Messstellen Messgrößen erfassen, die für einen bestimmten Zustand des Elektroenergieversorgungsnetzes oder dem einer seiner Komponenten charakteristisch sind.

Darüberhinaus sind Automatisierungs- und Steuergeräte bekannt, die zum Automatisieren bestimmter Vorgänge sowie zum Ansteuern bestimmter Komponenten einer Anlage vorgesehen sind.

Aufgabe der Erfindung ist es, das eingangs genannte Verfahren und die eingangs genannte Vorrichtung dahin zu verbessern, dass die Automatisierung, das Steuern und/oder der Schutz der Anlage besonders kostengünstig und ohne großen Wartungsaufwand erfolgen kann.

Die Erfindung löst diese Aufgabe dadurch, dass die Messignale an eine zentrale Recheneinheit übertragen werden, auf der alle die Schutz- die Steuer- und die Automatisierungsfunktionen (SSAF) der Anlage zentral ablaufen und merhere Abgänge oder Komponenten zeitgleich von der zentralen Recheneinheit überwacht oder gesteuert werden oder Vorgänge automatisiert ablaufen.

Im Rahmen der Erfindung ist ein Verfahren geschaffen, bei dem Schutz-, Steuer und Automatisierungsfunktioinen (SSAF) nicht mehr auf mehreren separaten intelligenten elektrischen Geräten - im Englischen Intelligent Electronic Devices (IED) genannt - statisch zugeordnet sind. Im Rahmen der Erfindungs sind alle SSAFen auf lediglich einer zentralen Recheneinheit angeordnet sind, die für die Überwachung, Steuerung und Autormatisierung der gesamten Anlage verantwortlich ist. Die zentrale Recheneinheit kann ebenfalls als IED bezeichnet werden.

Die erfindungsgemäße Vorrichtung weist neben externen Geräten wir beispielsweise Vorverarbeiteungseinheiten, die auch Merging Units genannt werden, die zentrale Recheneinheit als Hauptkomponente auf. Die zentrale Rechneneinheit kann auch direkt mit Messesoren verbunden sein. Bei dieser Ausgestaltung der Erfindung sind die Vorverarbeitungseinheiten in der Recheneinheit verbaut. Mit anderen Worten kann die zentrale Recheneinheit selbst Eingägng für die Messwandler aufweisen.

Bevorzugt ist im Rahmen der Erfindung jedoch eine externe Anordung der Vorverarbeitungseinheiten, die dann über ein Kommunikationsnetzwerk mit der zentralen Recheneinheit verbunden sind. Für den Nutzer des erfindungsgemäßen Verfahrens ist daher ein einziger Zugangspunkt für alle Vorgänge, Prozesse und Schutzfunktionen der Anlage bereitsgestellt. Die zentrale Recheneinheit kann sämtliche SSAFen für sich gestellt durchführen, überwachen und somit die gesamte Anlage versorgen.

Unter einer Anlage kann in Rahmen der Erfindung jede Form einer industriellen Anlage verstanden werden, z.B. eine elektrische Anlage, wie eine elektrische Schaltstation oder ein elektrisches Energieversorgungsnetz, eine Anlage zum Transport oder zur Verteilung von Feststoffen, Gas oder Flüssigkeiten oder aber auch eine chemische oder verfahrenstechnische Prozessanlage oder eine Produktionsanlage. Nachfolgend wird die Erfindung lediglich beispielhaft anhand einer elektrischen Anlage erläutert. Eine solche elektrische Anlage umfasst einzelne Komponenten, beispielsweise in Form von Leitungen, und Kabeln, Schaltern, Transformatoren, Generatoren, Motoren, Umrichtern, Lasten, elektrische Energieerzeuger oder dergleichen.

Wie bereits aufgeführt, können die Messwerte beispielsweise über einen Prozessbus an die zentrale Recheneinheit übermittelt werden. Hierbei wird der Prozessbus beispielsweise über das Parallel Redundancy Protocol PRP als Ethernet- oder als Glasfaserleitung ausgeführt. Da somit die Wandler nicht direkt mit dem zentralen Schutzgerät verbunden werden müssen, ergibt sich eine Kupferersparnis. Zudem erleichtert dieses Verfahren die Inbetriebsetzung und die Wartung der Anlage, da weniger Kabel verlegt werden müssen.

Vorteilhafterweise weist die zentrale Recheneinheit mehrere binäre Ein- und Ausgänge zur Ansteuerung von Komponenten der Anlage auf. Die zentrale Recheneinheit kann im Rahmen der Erfindung über Schutuzfunktionen zum Schutz der Anlage aufweisen. Ist die Anlage ein elektrisches Versorgungsnetz mit Komponenten wie Sammelschienen, Phasenleitern, Abgängen, Transfomatoren, Trennern und Leisungsstaltern ist es zweckmäßig, wenn die zentrale Recheneinheit mehrere binäre Ausgänge aufweist. Über diese Ausgänge kann beispielsweise ein Leistungsschalter angesteuert werden, so dass dieser eine Schaltvorgang (Trennen oder Zusammenbringen seiner Kontaktstücke) durchführt. Über den binären Ausgang können natürlich auch andere Komponenten der Anlage angesteuert werden.

Die zentrale Recheneinheit kann mit anderen Worten wenigsten eine Steuerungseinheit aufweisen.

Vorteilhafterweise laufen die SSAF kontainerisiert auf der zentralen Recheneinheit ab. Mit anderen Worten laufen die Instanzen der SSAF in so genannten Containern ab. In einem Container läuft beispielsweie eine Automatisierungsfunktion ab. Ein weiterer Container kapselt die Instanz einer Differentialsschutzfunktion, wobei in fünf weiteren Containern Distanzschutfunktionsinstanzen unabhängig voneinander ablaufen. Solche Container sind dem Fachmann im Bereich der IT bestens bekannt, so dass weitere Ausführungen hierzu an dieser Stelle entfallen können. Durch die Verwendung von Containern ist gesichert, dass die einzelnen Vorgänge, - also der SSAF - unabhängig voneinander abläufen, so dass gegenseitige Störungen vermieden sind.

Vorteilhafterweise werden die Messwerte von Vorverarbeitungseinheiten erzeugt, wobei jede Vorverarbeitungseinheit ausgangsseitig über einen Prozessbus mit den anderen Vorverarbeitungseinheiten und der zentralen Recheneinheit verbunden ist. Wie bereits weiter oben ausgeführt wurde, ist es mithilfe des Prozessbuses möglich geworden, auf kostenintensive Anschlüsse der Messwandler mit der Zentraleinheit zu verzichten. Gemäß dieser Ausführung der Erfindung sind Vorverarbeitungseinheiten vorgesehen, welche die von den Messwandlern ausgangsseitig bereitgestellen analogen Signale aufnehmen und unter Gewinnung von Abtastwerten abtastet. Die Abtastwerte werden anschließen mittels eines Analog-Digitalwandlers digitalisiert.

Im Rahmen der Erfindung ist es natürlich auch möglich, die Messwerte synchronisiert zu erfassen und als Zeigermesswerte bereitzustellen. Die Zeigermesswerte können dann im Rahmen von Datentelegrammen über den Prozessbus beispielsweise an die zentrale Recheneinheit versendet werden. Die Datentelegramme sind bevorzugt mit einem Zeitstempel versehen. Dazu weisen die Vorverarbeitungseinheiten eine Uhr auf, deren Zeitstempel mit der jeweiligen Messung verknüpft wird. Eine Uhr wird als Master-Uhr festgelegt. Alle anderen Uhren passen sich zetilich an die Masteruhr an, sie synchronisieren sich - mit anderen Worten - mit der Masteruhr. Auf diese Weise erzeugen alle Uhren zu einem bestimmten Zeitpunkt den gleichen Zeitstempel. Zeitgleich erfasste Messwerte können so miteinander verglichen werden. Eine zeitsynchrone Messwerteerfassung ist jedoch dem Fachmann bestens bekannt. Weitere Ausführungen hierzu können daher entfallen.

Gemäß einer bevorzugten Ausgestaltung der Erfindung ist die zentralen Recheneinheit eine aktive zentrale Recheneinheit, wobei neben der aktiven Recheneinheit eine identisch aufgebaute passive zentrale Recheneinheit vorgesehen ist, wobei die aktive zentrale Recheneinheit für den Schutz, die Automatisierung und die Steuerung der Anlage zuständig ist und die passive zentrale Recheneinheit, bei Ausfall der aktiven zentralen Rechneneinheit, deren aktive Rolle und somit die Zuständigkeit für den Schutz, die Automatisierung und die Steuerung der Anlage übernimmt. Mit anderen Worten ist die zentrale Recheneinheit redundant ausgeführt. Dies dient vor allem Sicherheitsgründen. Darüber hinaus ist jeodoch auch die Wartung der einen zentralen Recheneinheit ermöglicht, ohne auf den Schutz, die Steuerung oder die Autoamtisierung der Anlage verzichten zu müssen.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: eine vorbekanne Vorrichtung zur Durchführung eines Verfahrens gemäß dem Stand der Technik und
- Figur 2: eine erfindungsgemäße Vorrichtung zur Durchführung des erfindungsgemäßen Verfahrens verdeutlichen.

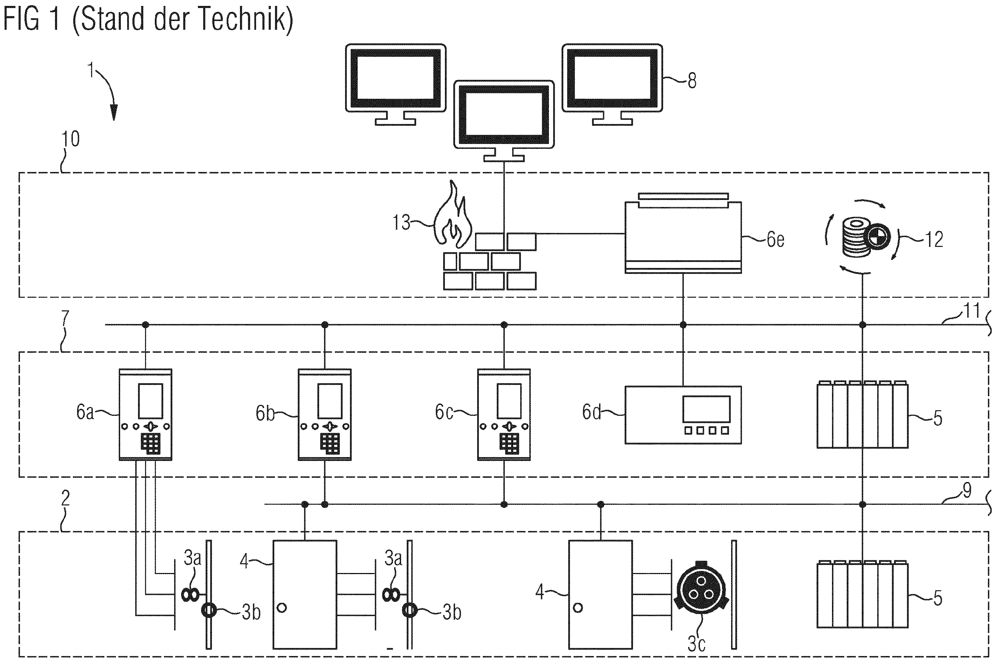

Figur 1 verdeutlicht eine Vorrichtung 1 gemäß dem Stand der Technik, die zum Schutz, zur Steuerung oder Automatisierung einer figürlich nicht dargestellten Anlage eingerichtet ist. Die Vorrichtung 1 ist zur Durchführung eines ebenfalls vorbekannten Verfahrens eingerichtet. Sie verfügt über Bauteile, die in drei verschiedenen Ebenen 2, 7 und 10 untergebracht sind. Die unterste Ebenen wird als Prozessebene 2 und die darüber liegende mittlere Ebene wird als Feldebene 7 bezeichnet. Die oberste Ebene ist die Stationsebene 10.

Auf der Prozessebene 2 sind Messensoren 3 und Vorverarbeitungseinheiten 4 angeordnet. Bei den mit 3a gekennzeichneten Messsensoren 3 handelt es sich um klassische Spannungswandler 3a. Klassische Stromwandler 3b sind ebenfalls erkennbar. Kleinsignalwandler im Englischen als Low Power Intrument Transformer LPIT bezeichnet sind mit 3c referenziert. Ferner ist eine Fernwirkeinheit 5 auf der Prozesseben 2 erkennbar, die ebenfalls mit Messensoren 3 verbunden ist, dies ist jedoch figürlich nicht dargestellt. Abweichend davon erhält die Fernwirkeinheit 5 die Messwerte über einen Prozessbus 9 von den Vorverarbeitungseinheiten 4.

Die Messensoren 3 erfassen jeweils eine Messgröße, die einen Zustand der Anlage oder den Zustand von Komponenten der Anlage beschreibt. Ferner kann die Messgröße eine physikalische Größe sein, die einen oder mehrere Zustände der Anlage beeinflussen kann. Als Beispiel hierfür sei die Temperatur genannt. So sind die Messsensoren beispielsweise Sensoren zur Messung elektrischer Größen wie beispielsweise Strom oder Spannung. Darüber hinaus können die Sensoren als Temperatursensoren, Durchflusssensoren, Strömungssensoren oder dergleichen ausgestaltet sein.

In dem in der Figur 1, in der Prozessebene 2 links dargestellten Fall sind die Messsensoren klassische Strom- und Spannungswandler 3b, 3a, die direkt mit dem Eingang eines IEDs 6a verbunden sind. In dem Beispiel rechts daneben sind ein Spannungswandler 3a und ein Stromwandler 3b mit dem Eingang einer Vorverarbeitungseinheit 4 verbunden. Bei der Vorverarbeitungseinheit 4 handet es sich um eine so genannte Merging Unit 4. Darüber hinaus ist in der Figur 1 dargestellt, dass eine Vorverarbeitungseinheit 4 mit einem Kleinsignalwandler, der als Rogowskispule 3c ausgestaltet ist, verbunden ist. Alle Vorverarbeitungseinheiten 4 sind über einen Kommunikationsbus 9 mit den IEDs 6b, 6c und 6d verbunden. Der in Figur 1 dargestellte Kommunikationsbus 9 ist als Ethernetverbindung ausgebildet. Das IED 6a ist beispielsweise ein Schutzgerät, das IED 6b eine Steuerungseinheit und das IED 6c ein Power Quality Rekorder (Netzqualitäsrekorder). Alle IEDs sind in der Feldebene 7 angeordnet.

Die Vorverarbeitungseinheiten 4 tatsten die von dem jeweiligen Messsensor 3 erhaltenenen analogen Messsignale unter Gewinnung von Abtastwerten ab. Die Abtastwerte werden anschließend durch Analog-Digital-Wandler in digitale Messwerte umgewandelt werden. Die Vorverarbeitungseinheiten 4 trennen mit anderen Worten die digitale von der analogen Welt.

Eine sowohl in der Prozessebene 2 als auch in der Feldebene 7 vorgesehene Fernwirkanordnung 5 kann grundsätzlich als Bindeglied zwischen einer Anzahl von Feldgeräten 6 in der Feldebene 7 und einer Leitstellenanordnung 8 aufgefasst werden. Sie steht dafür sowohl mit der Leitstellenanordnung 8 als auch mit den Feldgeräten 6 in Kommunikationsverbindung. Beispielsweise können Messwerte mehrerer Feldgeräte 6 mittels der Fernwirkanordnung 5 gesammelt und an die Leitstellenanordnung 8 weitergeleitet werden. In entsprechender Weise können von der Leitstellenanordnung 8 ausgelöste Steuerbefehle über die Fernwirkanordnung 5 an die betreffenden Feldgeräte weitergeleitet werden.

Fernwirkanordnungen 5 stellen in diesem Zusammenhang lokale Kommunikations- und Steuergeräte dar, welche die von Sensoren übermittelten Information sammeln und an die Leitstellenanordnung weiterleiten, einfache lokale Steuerfunktionen übernehmen und/oder Sollwerte und Steuerungsbefehle an Aktoren als Komponenten der Anlage weitergeben. Diese lokalen Fernwirkanordnungen 5 sind üblicherweise mit geeigneten Kommunikationsmodulen (z.B. Switche, Hubs, Router, Modems, Kommunikationskoppler) verbunden, um Informationen gemäß speziellen Fernwirkprotokollen (z.B. IEC 60870-5-101/-104) mit der Leitstellenanordnung auszutauschen. Dabei verwenden sie entweder öffentliche Kommunikationsnetze (z.B. Mobilfunk- oder DSL-Netze) oder private Kommunikationsnetze (z.B. drahtgebundene Kommunikationsbusse oder Glasfasernetze). Die Sensoren oder Aktoren werden üblicherweise über elektrische Leitungen (analog oder digital) oder spezielle Bussysteme (z.B. IEC 60870-5-103, Profibus, Modbus etc.) an die Fernwirkanordnungen angeschlossen.

Gemäß dem Stand der Technik sind in der Feldebene 7 die intelligenten elektrischen Geräte (IEDs - intelligent electronic devices) 6 angeordnet, die unter Ausführung bestimmter Algorithmen selbständig Funktionen zum Schutz, zur Steuerung oder zur Automatisierung der figürlich nicht dargestellten Anlage wahrnehmen. Die IEDs 6 können in diesem Zusammenhang insbesondere Schutz- 6a und Steuergeräte 6b, Fehlerrekorder 6c, Power Quality Geräte 6c oder figürlich nicht dargestellte Leistungsmessgeräte (Power Meter) sein.

Wie bereits ausgeführt wurde, sind die IEDs 6 mit den Vorverarbeitungseinheiten 4 über einen Prozessbus 9 verbunden. Über diesen Prozessbus 9 können die Messwerte den IEDs 6 in Gestalt von Datentelegrammen zugeführt werden. Dabei können die Vorverarbeitungseinheiten 4 oder die IEDs 6 über eine interne Uhr verfügen, die mit den Uhren der anderen IEDs 6 synchronisiert ist. Die Synchronisation dieser Uhren ist dem Fachmann bestens bekannt, so dass Ausführungen hierüber an dieser Stelle entfallen können. Mit Hilfe der Uhren ist eine zeitsynchrone Datenerfassung ergmöglicht.

Bei der in Figur 1 dargestellten Vorrichtung verfügt jede IED über die ihm fest zugeordnete SSAFen (Schutz-, Steuer- oder Automatisierungsfunktion)en. Diese SSAFen sind der jeweiligen IED statisch zugeordnet. Nachteilig an dieser Lösung ist, dass jede IED einzeln gewartet werden muss. Ferner stehen Parmeter oder sonstige Daten einer IEDs nich nicht allen IEDs gleichzeitig zur Verfügung. Dies sorgt neben hohen Anschaffungskosten für die Hardware für hohen Personalkosten im Bereich der Wartung.

Auf der Stationsebene 10 sind in der Regel Bildschime angeordnet, die eine Überwachung der Anlage ermöglichen. Diese sind jedoch figürlich nicht dargestellt. Ferner ist ein als Automatisierungsgerät 6e ausgestaltetes IED 6 erkennbar sowie eine Einheit 12, die für die Auswertung von Zertifikaten eingerichtet ist. Mittels der Zertifikate werden die Zugirffsberechtigungen auf die Vorrichtung 1 verwaltet. Ferner ist eine so genannte Firewall 13 erkennbar, welche die Vorrichtung 1 gegenüber einem unbefugten Zugriff von außen schützen sollen.

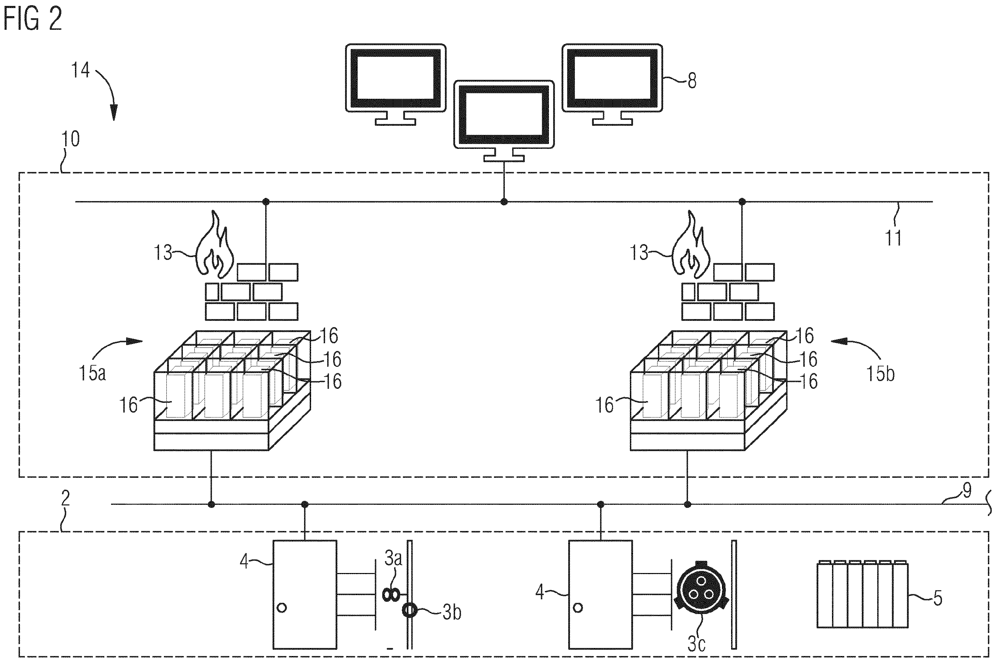

Figur 2 zeigt eine erfindungsgemäße Vorrichtung 14, die zur Ausführung des erfindungsgemäßen Verfahrens vorgesehen ist. Es ist erkennbar, dass im Vergleich mit der vorbekannten Vorrichtung 1 gemäß Figur 1 die Komponenten der Vorrichtung, die in in Figur 1 in der Feldebene 7 angeordnet waren, so wie die Feldebene 7 selbst entfallen sind. Im Rahmen der Erfindung sind lediglich eine Prozessebene 2 und eine Stationsebene 10 vorgesehen.

Gemäß dem gezeigten Ausführungsbeispiel der erfindungsgemäßen Vorrichung 14 ist eine zentrale Recheneinheit 15a vorgesehen, die sich auf der Stationsebene 10 befindet. Die zentrale Recheneinheit 15a ersetzt die separten individuellen IEDs 6. Die zentrale Recheneinheit 15a übernimmt die Aufgaben aller IEDs, die in Figur 1 auf der Feldebene 7 gezeigt sind. Mit anderen Worten laufen auf der zentralen Recheneinheit 15a eine Vielzahl von Instanzen der SSAFen nebeneinander oder mit anderen Worten parallel zueinander ab. Um dabei eine gegenseitige Beeinflussung der Instanzen der SSAFen zu vermeidnen, sind Container 16 vorgesehen, in denen die Instanzen der SSAFen ablaufen. Die SSAFen laufen mit anderen Worten containerisiert ab. Ungewollte Kopplungen können so vermieden werden.

Auf der Prozessebene 2 der Vorrichtung 14 sind wieder die Vorverarbeitungseinheiten 4 oder Merging Units angeordnet, wobei eine der Vorverarbeitungseinheiten 4 wieder mit jeweils einem klassischen Strom- und Spannungswandler 3b beziehungsweise 3c und die andere Vorverarbeitungseinheit 4 mit einem Kleinsignalwandler 3c, hier einer Rogoowkispule, verbunden ist.

Es ist ferner erkennbar, dass die Vorverarbeitungseinheiten 4 über einen als Ethernetverbindung ausgestalteten Prozessbus 9 mit der zentralen Recheneinheit 15a verbunden ist. Es ist ferner erkennbar, dass neben der aktiven zentralen Recheneinheit 15a eine passive zentrale Recheneinheit 15b aus Sicherheitsgründen vorgesehen ist. Die passive zentrale Recheneinheit 15b wird über den Prozessbuss 9 mit den gleichen Messwerten versorgt, wie die aktive zentrale Recheneinheit 15a. Sie passive zentrale Recheneinheit 15b ist daher ebenfalls mit allen Vorverarbeitungseinheiten 4 verbunden. Darüberhinaus weisen beide zentrale Recheneinheiten 15a und 15b die gleiche Konfiguration auf.

Bei einer Störung der aktiven zentralen Recheneinheit 15a, kann also der Schutz, die Steuerung und Automatisierung der Anlage sofort von der zentralen Recheneinheit 15b übernommen werden, die ohne relvanten Zeitverlust von ihrem passiven in ihren aktiven Zustand wechselt.

Beide zentralen Recheneinheiten 15 sind ferner über einen Kommunikationsverbindung 11 miteinander sowie mit einer Stationsleitzentrale 8 verbunden. Wieder dienen eine Firewalls 13 dem Schutz vor ungewolltem Zugriff von Außen.

## Patentansprüche

1. Verfahren zum Schutz, zur Automatisierung und zur Steuerung einer Anlage mit den Schritten:
a. Erfassen mehrerer den Zustand der Anlage oder Komponenten der Anlagen charakterisierenden oder beeinflussenden Messgrößen mittels Messsensoren 3 unter Gewinnung von mehreren Messsignalen;
b. Erzeugen von Messwerten aus jedem Messsignal;
c. Weiterleiten der Messwerte an eine intelligente elektronische Einheit (IED) (15),
d. wobei jede IED (15) wenigstens eine Schutz-, Steuerungs- oder Automatisierungsfunktion (SSAF) aufweist, und
e. wobei eine Schutzfunktion die Messwerte auf das Vorliegen wenigstens einer Fehlerbedingungen hin untersucht und bei Vorliegen einer Fehlerbedingung ein Fehlersignal erzeugt, eine Automatisierungsfunktion zur Durchführung von Prozessen innerhalb der Anlage und eine Steuerungsfunktion zur Steuerung von Komponenten der Anlage eingerichtet sind,
**dadurch gekennzeichnet dass,**
f. die Messignale an eine zentrale Recheneinheit (15) übertragen werden, auf der alle die Schutz- die Steuer- und die Automatisierungsfunktionen (SSAFen) zentral ablaufen und Komponenten der Anlage zeitgleich von der zentralen Recheneinheit (15) überwacht oder gesteuert werden oder Vorgänge automatisiert ablaufen.

2. Verfahren nach Anspruch 1, **dadurch gekennzeichnet, dass** die Instanzen der SSAFen kontainerisiert auf der zentralen Recheneinheit (15) ablaufen.

3. Verfahren nach einem der vorhergehenden Ansprüche, **dadurch gekennzeichnet, dass** die zentrale Recheneinheit (15) mehrere binäre Ein- und Ausgänge zur Ansteuerung von Komponenten der Anlage aufweist.

4. Verfahren nach einem der vorhergehenden Ansprüche, **dadurch gekennzeichnet, dass** die Messwerte von Vorverarbeitungseinheiten (4) erzeugt werden, die eingangsseitig mit wenigstens einem Messsensor (3) verbunden sind, wobei die Vorverarbeitungseinheit (4) die Messignale unter Gewinnung von Messwerten abtastet und die Messwerte anschließend digitalisiert.

5. Verfahren nach einem der vorhergehenden Ansprüche, **dadurch gekennzeichnet, dass** die zentrale Recheneinheit eine aktive zentrale Recheneinheit (15a) ist und dass neben der aktiven Recheneinheit (15a) eine identisch zu dieser aufgebaute passive zentrale Recheneinheit (15b) vorgesehen ist, wobei die aktive zentrale Recheneinheit (15a) für den Schutz, die Automatisierung und die Steuerung der Anlage zuständig ist und die passive zentrale Recheneinheit (15b), bei Ausfall der aktiven zentralen Rechneneinheit (15a), deren aktive Rolle und somit die Zuständigkeit für den Schutz, die Automatisierung und die Steuerung der Anlage übernimmt.

6. Vorrichtung (14) zum Schutz, zur Automatisierung und zur Steuerung einer Anlage mit einer zentralen Recheneinheit (15), die zur Durchführung eines Verfahrens gemäß einem der vorhergehenden Ansprüche eingerichtet ist.
